(19) Europäisches Patentamt / European Patent Office / Office européen des brevets

(11) **EP 2 355 945 B1**

(12) **FASCICULE DE BREVET EUROPEEN**

(45) Date de publication et mention de la délivrance du brevet:
**05.10.2016 Bulletin 2016/40**

(21) Numéro de dépôt: **09768210.8**

(22) Date de dépôt: **17.11.2009**

(51) Int Cl.:
**B22D 11/111** *(2006.01)*  **C04B 7/32** *(2006.01)*
**C21C 7/064** *(2006.01)*  **C21C 7/076** *(2006.01)*

(86) Numéro de dépôt international:
**PCT/FR2009/052204**

(87) Numéro de publication internationale:
**WO 2010/058122 (27.05.2010 Gazette 2010/21)**

(54) **CLINKER MAGNESIEN POREUX, PROCEDE DE FABRICATION ET UTILISATION COMME FLUX POUR LE TRAITEMENT DES LAITIERS D'ACIERIE**

POROSER MAGNESIA-KLINKER, VERFAHREN ZU DESSEN HERSTELLUNG UND VERWENDUNG DAVON ALS FLUSSMITTEL ZUR BEHANDLUNG VON STAHLHERSTELLUNGSSCHLACKE

POROUS MAGNESIA CLINKER, MANUFACTURING METHOD AND USE THEREOF AS FLUX FOR TREATING STEELMAKING SLAG

(84) Etats contractants désignés:
**AT BE BG CH CY CZ DE DK EE ES FI FR GB GR HR HU IE IS IT LI LT LU LV MC MK MT NL NO PL PT RO SE SI SK SM TR**

(30) Priorité: **19.11.2008 FR 0857847**

(43) Date de publication de la demande:
**17.08.2011 Bulletin 2011/33**

(73) Titulaire: **KERNEOS**
**92200 Neuilly-sur-Seine Cedex (FR)**

(72) Inventeurs:
• **GUICHARD, Sabine**
**F-38080 L'isle D'Abeau (FR)**
• **FRYDA, Hervé**
**F-38300 Meyrie (FR)**
• **WOHRMEYER, Christoph**
**40593 Dusseldorf (DE)**
• **JOLLY, Rémy**
**F-92100 Boulogne Billancourt (FR)**
• **ELORZA, Enrique**
**F-69001 Lyon (FR)**

(74) Mandataire: **Orsini, Fabienne et al**
**Cabinet Harle et Phelip**
**14-16 Rue Ballu**
**75009 Paris (FR)**

(56) Documents cités:
**US-A- 4 853 034    US-A1- 2005 049 138**

• **DATABASE INSPEC [Online] THE INSTITUTION OF ELECTRICAL ENGINEERS, STEVENAGE, GB; 2005, JIANG FENGHUA ET AL: "Transformation of gehlenite into Q phase in high-alumina cement system" XP002529908 Database accession no. 8577352 -& Journal of the Chinese Ceramic Society Chinese Ceramic Soc China, vol. 33, no. 4, 2005, pages 462-466, XP008106698 ISSN: 0454-5648**
• **HANIC, F.; HANDLOVIC, M. & KAPRALIK, I.: "The structure of a quaternary phase Ca20Al32-2vMgvSivO68" ACTA CRYST., vol. B36, 1980, pages 2863-2869, XP008106649**
• **PODWORNY, J.; WALA, T. & SAWKOW, J.: "Microstructural studies on the Q-phase in alumina cement clinker" SOLID STATE PHENOMENA, vol. 130, 2007, pages 225-228, XP008106661**

**Description**

La présente invention concerne de manière générale un clinker riche en magnésie particulièrement utile comme flux pour le traitement des laitiers des poches d'aciérie.

Par clinker, on entend un produit résultant du traitement à haute température (>1200°C) de matières intimement mélangées principalement constituées d'une source de CaO et d'une source de $Al_2O_3$.

Les flux sont des compositions minérales ajoutées au laitier des poches d'aciérie pour en faciliter la fluidification. Ces laitiers sont en particulier utilisés en métallurgie secondaire et permettent la purification des aciers et notamment leur désulfuration. Le rôle principal de ces flux est effectivement d'agir comme un fondant pour fluidifier le laitier ce qui facilite les échanges avec l'acier en fusion. L'inconvénient majeur des laitiers est de provoquer la corrosion des garnissages réfractaires des poches qui eux-mêmes comportent du MgO qui se dissout dans le laitier en fusion

Les flux classiques sont des compositions minérales constituées principalement de $Al_2O_3$ et de CaO (notamment sous forme d'aluminates de calcium) ; Ils sont généralement obtenus par fusion d'alumine et de chaux ou de précurseurs de ces composés.

Le brevet US 4,795,491 décrit un flux à base d'aluminate de calcium pour la désulfuration de l'acier liquide dans des poches d'aciérie. Ce flux contient de 9 à 20 % en poids de MgO. Ces flux synthétiques sont obtenus par fusion des constituants au-dessus de leurs points de fusion ce qui conduit à des produits ayant une très faible porosité ouverte (typiquement inférieure à 1% telle que mesurée selon l'essai de « mesure sous eau de la porosité ouverte » défini ci-après). Ce brevet indique que l'utilisation d'oxyde de magnésium (MgO) dans le flux synthétique réduit la détérioration des garnissages réfractaires des poches qui eux-mêmes comportent du MgO qui se dissout dans le laitier en fusion. Ainsi, l'apport de MgO par le flux dans le laitier en fusion permet de réduire la perte en MgO par corrosion des revêtements réfractaires.

Toutefois, les flux synthétiques du brevet US 4,795,491, de par leur faible porosité et leur surface d'échange restreinte, peuvent présenter l'inconvénient de se dissoudre ou de se disperser lentement dans le laitier en fusion, ce qui conduit à une libération lente de MgO dans le laitier en fusion.

En outre, l'élaboration de flux contenant une teneur en magnésie jusqu'à 20% en poids par un procédé de fusion impose de travailler à des températures très élevées, ce qui a des répercussions négatives en terme de consommation énergétique, production de $CO_2$, durée de vie des fours de production, etc..

Enfin, les flux synthétiques denses, tels ceux obtenus par fusion, présentent encore l'inconvénient d'être sujet au « poussiérage », c'est-à-dire de se dégrader dans le temps pour former des particules fines (de taille inférieure à 1 mm) qui nuisent à la facilité de manipulation de ces flux granulaires entraînant des problèmes d'hygiène et de sécurité industrielle.

La demande de brevet US 2007/0000350 décrit un agent couvrant sous forme de grains ayant une composition chimique et minéralogique requise pour la métallurgie, et qui forme à la fois le laitier fondu et, au-dessus de celui-ci, par suite de la porosité appropriée des grains, une couche faisant barrière thermique sur le bain de métal fondu. Cet agent couvrant qui a été rendu poreux est à base d'aluminates de calcium dans le rapport $CaO/Al_2O_3$ de 0,25 à 4 et peut comporter jusqu'à 15% en masse de phases auxiliaires optionnelles, notamment MgO et/ou $MgOSiO_2$ et/ou $TiO_2$ et/ou $Fe_2O_3$ et/ou des métaux alcalins. La porosité peut varier de 5 à 70% en volume. Le but essentiel de cet agent couvrant est de former une couche granulaire solide formant un écran thermique au-dessus du bain de métal fondu.

On connaît également de l'état de la technique, le document US 4,853,034 qui décrit un laitier synthétique d'aluminate de calcium pouvant contenir jusqu'à 20 % en poids de MgO. Ce laitier est obtenu par fusion des constituants et est utilisé pour la désulfuration des aciers.

Le document US 2005/0049138 décrit une composition granulaire réfractaire comprenant un clinker amélioré à base d'aluminate de calcium représenté par la formule $C_nA_x$, dans laquelle C représente l'oxyde de calcium et A représente l'oxyde d'aluminium, n vaut un entier compris entre environ 1 et environ 12, x vaut un entier compris entre environ 1 et environ 24, et ce clinker possède moins d'environ 50 % en poids de $C_{12}A_7$.

L'invention a donc pour objet de fournir un clinker utile comme flux lors de la fabrication de l'acier. Ces clinkers utiles remédient aux inconvénients des flux de l'art antérieur. Notamment, ils se dissolvent ou se dispersent rapidement dans le laitier en fusion même lorsque le flux a des teneurs élevées en MgO (> 20 % en poids) de façon à obtenir rapidement une saturation au moins partielle en MgO du laitier.

L'invention a également pour objet un clinker tel que défini ci-dessus ayant une tendance réduite à la formation de poussière et donc contribuant fortement à l'amélioration des conditions d'hygiène et de sécurité lors des manipulations dans des environnements industriels.

L'invention a encore pour objet un procédé de fabrication du clinker, notamment par frittage, ainsi que son utilisation comme flux en particulier pour la préparation des laitiers des poches d'aciérie.

L'invention a aussi pour objet un produit issu de concassage/criblage d'un clinker tel que défini ci-dessus.

L'invention concerne également l'utilisation comme flux du produit issu du clinker. Il sert, par exemple, à la formation des laitiers de métallurgie secondaire utilisés pour la purification de l'acier, notamment la désulfuration ou à la réalisation d'une couverture pour un répartiteur de coulée continue de l'acier. Les buts ci-dessus sont atteints selon l'invention par un clinker tel que défini à la revendication 1 et comprenant, par rapport au poids total du clinker :

dans sa composition chimique :

- 30 à 85 % $Al_2O_3$ ;
- 3 à 45% CaO ;
- 9% à 45% MgO ;

dans sa composition minéralogique

- 15 à 65% de phase $Q_1$ avec Q = $Ca_{20} Al_{32-2x}Mg_xSi_xO_{68}$ avec $2,5 \leq x \leq 3,5$ ;
- 5 à 40% de phase $MgAl_2O_4$,

et ayant une porosité ouverte, telle que mesurée par l'essai de mesure sous eau de la porosité ouverte selon la norme NF B40-312 modifiée tel que décrit ci-après de 4% à 60%, de préférence de 5 à 45 %.

L'invention a encore pour objet l'utilisation d'un clinker tel que défini ci-dessus pour la réduction de poussière de taille inférieure à 1mm dans des environnements industriels.

Par porosité ouverte, on entend l'ensemble des pores d'un matériau solide débouchant à l'extérieur du matériau soit directement soit par l'intermédiaire d'interconnexions.

Comme indiqué précédemment, les clinkers de l'invention comprennent chimiquement, par rapport au poids total du clinker, de 30 à 85 % d'alumine ($Al_2O_3$), mieux de 35 à 65 % et de préférence de 35 à 55 %.

De préférence, les clinkers de l'invention comprennent chimiquement de 10 à 40 % en poids, mieux de 15 à 35 % en poids, de CaO.

Les clinkers selon l'invention comprennent chimiquement au moins 9% en poids, généralement au moins 15% en poids et de préférence au moins et mieux plus de 20 % à 45 % en poids de MgO.

De préférence, l'alumine ($Al_2O_3$), la chaux (CaO) et la magnésie (MgO) représentent ensemble au moins 50 %, de préférence au moins 70 % du poids total du clinker.

Le clinker de l'invention comprend en outre une quantité de silice ($SiO_2$) au moins suffisante pour obtenir la quantité minimale requise de phase Q.

Le clinker selon l'invention comprend généralement de 0,5 à 20 %, de préférence de 0,5 à 10 % et mieux au moins 1 % de silice ($SiO_2$) par rapport au poids total du clinker.

Comme cela est bien connu, le clinker de l'invention peut également comporter d'autres oxydes :

| Oxydes | % en poids par rapport au poids total du clinker |
|---|---|
| $Fe_2O_3$ | 0-50 |
| $TiO_2$ | 0-20 |
| $Na_2O$, $K_2O$, $P_2O_5$, $B_2O_3$, $SO_3$, oxydes métalliques, tels que $Cr_2O_3$, $Mn_2O_3$ .... | 0-20 |

Les matières premières utilisées sont généralement la bauxite, l'alumine, la calcite, la dolomie, la magnésie ou toutes autres matières premières et sous-produits contenant les oxydes ci-dessus.

Dans une réalisation particulière préférée de l'invention, les clinkers de l'invention comprennent chimiquement 15 %, mieux 20 %, et mieux encore plus de 20 % en poids de MgO.

Généralement, les clinkers selon l'invention comprennent, par rapport au poids total du clinker de 5 à 25% de MgO libre (périclase).

Une caractéristique essentielle des clinkers de l'invention est qu'ils possèdent une porosité ouverte importante et plus spécifiquement d'au moins 4 % telle que mesurée dans l'essai de mesure sous eau de la porosité ouverte défini ci-après.

De préférence, les clinkers selon l'invention ont une porosité ouverte, telle que déterminée selon l'essai de mesure sous eau, de 4 à 60 %, de préférence de 4 à 45 %, mieux de 4 à 20 % et mieux encore de 4 à 10 %.

En général, dans les clinkers selon l'invention, l'ensemble des phases minéralogiques $Ca_{12}Al_{14}O_{33}$, ($C_{12}A_7$), $Ca_{20}Al_{32-2x}Mg_xSi_xO_{68}$ ($2,5 \leq x \leq 3,5$, phase Q), $MgAl_2O_4$ (Spinelle) et MgO (périclase) représente au moins 30 % du poids total du clinker, de préférence au moins 40% et mieux au moins 50 % du poids total du clinker.

Les phases minéralogiques et MgAl$_2$O$_4$ peuvent représenter respectivement, par rapport au poids total du clinker, 15 à 65 % pour la phase Q et 5 à 40 % pour MgAl$_2$O4. De préférence, la phase Q représente de 20 à 65 % en poids du clinker et la phase MgAl$_2$O$_4$ représente de 5 à 30 % en poids du clinker.

De préférence, les clinkers selon l'invention comprennent également de 2 à 15 %, mieux de 4 à 12 % par rapport au poids total du clinker de phase Ca$_{12}$AL$_{14}$O$_{33}$ (C$_{12}$A$_7$).

Généralement, la présence de MgO dans les clinkers d'aluminates de calcium tend à augmenter la température de fusion des clinkers. La composition minéralogique des clinkers de l'invention permet d'obtenir des clinkers ayant des températures globales de fusion relativement basses, généralement comprises entre 1300 et 1800°C (norme DIN 51730).

Les clinkers de l'invention peuvent être obtenus par frittage des constituants de base à une température de 1200 à 1500°C pendant une durée de 15 minutes à 1 h, généralement dans des fours rotatifs tels que ceux utilisés pour la fabrication du ciment, et si nécessaire broyage du produit fritté résultant pour obtenir la granulométrie voulue. Pour l'application en métallurgie secondaire, il est typique d'utiliser la fraction inférieure à 25 mm du produit obtenue par criblage/concassage.

Le frittage est un procédé d'agglomération par réaction à l'état solide de matières pulvérulentes à une température inférieure à celle de formation d'une phase liquide.

Toutefois, dans le cas du frittage, la présence d'une faible proportion de produit en phase liquidé peut être tolérée pendant l'opération dé frittage pour autant que la phase solide reste majoritaire, de préférence au minimum 70 % en poids par rapport au poids total de la composition.

Le procédé de frittage selon l'invention est bien évidemment très différent du procédé de fusion classique dans lequel l'ensemble des composants est chauffé pour assurer la fusion complète du produit de manière à ce que la réaction s'effectue en phase liquide.

Les clinkers selon l'invention ont une taille de particules supérieure à 1 mm et pouvant aller jusqu'à 50 mm, de préférence jusqu'à 25 mm.

Comme mentionné ci-dessus, les clinkers selon l'invention sont moins sujets à la production de poussière que les clinkers et flux de l'art antérieur, notamment les flux denses obtenus par des procédés de fusion. Dans le cadre de la présente invention, on entend par « sujet à la production de poussière » le fait qu'au cours du temps et/ou sous certaines conditions, notamment après l'essai de stabilité en autoclave défini ci-après, la quantité de particules de taille inférieure à 1 mm s'accroisse significativement, ce qui est le cas des flux magnésiens (riches en MgO) de faible porosité ouverte, généralement obtenu par un procédé de fusion. Les clinkers selon l'invention présentent en général un taux de particules, de taille inférieure à 1 mm, suite à l'essai de stabilité, inférieur à 1 %, en poids.

Sans vouloir être lié par une théorie, les inventeurs pensent que la porosité ouverte est un paramètre important en ce qui concerne la production de poussière des flux magnésiens. En effet, la magnésie libre (périclase) réagit avec l'eau pour former de la brucite, ce qui crée un phénomène d'expansion.

Quel que soit le clinker magnésien, de la magnésie libre réagira avec l'eau atmosphérique pour former de la brucite. Dans le cas d'un clinker dense (de faible porosité ouverte), la formation de brucite provoquera l'éclatement du clinker par expansion et fissuration induite, ce qui accroît la surface spécifique du clinker et la possibilité de réaction de MgO et par suite la production de poussière.

Dans le cas des clinkers poreux selon l'invention, la présence des pores accomode la formation de la brucite sans qu'il y ait éclatement du clinker, ce qui limite grandement le risque de production de poussière.

<u>Mesure de porosité sous eau</u> (selon la norme NFB 40-312 modifiée)

- Prélever environ 50 g de clinker ayant une dimension de granule supérieure à 5 mm ;
- Les placer dans un tamis d'ouverture de maille inférieure et les souffler délicatement au moyen d'air comprimé pour en éliminer les particules fines éventuelles ;
- Peser l'échantillon de clinker sec et noter le poids P$_s$ ;
- Mettre l'échantillon de clinker dans une coupelle et placer la coupelle dans une cloche à vide reliée à une pompe à vide et munie d'une arrivée d'eau ;
- Mettre en marche la pompe à vide et laisser faire le vide pendant environ 15 minutes jusqu'à une valeur de vide de 200 mbars.
- Ouvrir le robinet d'eau délicatement tout en laissant la pompe à vide fonctionner et remplir d'eau jusqu'à ce que le niveau de l'eau soit un centimètre au-dessus de l'échantillon de clinker ;
- Laisser la pompe à vide en fonctionnement pendant au moins une heure pour maintenir un vide de 200 mbars, et jusqu'à ce que l'on ne voit plus de bulles remonter vers la surface ;
- Arrêter la pompe à vide et ouvrir la cloche à vide ;
- Placer l'échantillon dans le tamis d'une balance hydrostatique préalablement tarée et effectuer la pesée avec l'échantillon immergé sous l'eau et noter le poids P$_L$.
- Récupérer délicatement l'échantillon de clinker une fois les pores remplis d'eau et l'essuyer très légèrement avec une éponge ;

- Peser rapidement l'échantillon de clinker et noter le poids $P_H$.

La porosité ouverte en % est égale à :

$$[(P_H-P_S)/(P_H-P_L)] \times 100.$$

Essai de stabilité en autoclave

Cet essai a pour objet de mettre en évidence l'aptitude au poussiérage des clinkers.

- Concasser le matériau de manière à obtenir une granulomètrie entre 1 et 3,15 mm (déterminée par tamisage)
- Peser 50 g d'échantillon de clinker concassé
- Mettre l'échantillon dans un bécher et placer le bécher dans un autoclave (environ 60cm$^3$) dans lequel on introduit également une coupelle contenant 1 ml d'eau ;
- Fermer l'autoclave et le placer dans une étuve à 150°C pendant 24 h ;
- Après retrait de l'étuve et refroidissement, ouvrir l'autoclave et sortir l'échantillon (vérifier visuellement l'apparition d'un poudrage dans le bécher) ;
- Peser l'échantillon et noter le poids P1 ;
- Passer l'échantillon sur un tamis d'ouverture <1 mm (refus 1 mm ou plus ; passant inférieur à 1 mm), recueillir le passant, le peser et noter le poids P2 ;
- Calculer le taux de poudrage (%) = P2/P1 x 100

Exemples

On a préparé les clinkers ayant les compositions chimiques et minéralogiques données dans les tableaux 1 et 2 ci-après.

TABLEAU 1

| Composition chimique (% en poids) | | | | | |
|---|---|---|---|---|---|
| | $Al_2O_3$ | CaO | $SiO_2$ | MgO | Autres oxydes |
| Clinker n°1 (fritté) | 44,9 | 36,6 | 3,8 | 10,4 | complément à 100 |
| Clinker n°2 (fritté) | 39,7 | 32,1 | 3,8 | 20,7 | complément à 100 |
| Clinker n°3 (fritté) | 38,9 | 26,6 | 3,6 | 27,4 | complément à 100 |
| Clinker A (fondu) | 39,6 | 31,9 | 3,8 | 20,6 | complément à 100 |
| Clinker B (fondu) | 39,2 | 26,0 | 3,4 | 27,1 | complément à 100 |

TABLEAU 2

| Composition minéralogique (% en poids) | | | | | | |
|---|---|---|---|---|---|---|
| | CA | C12A7 | Phase Q | $MgAl_2O_4$ | MgO | Autres |
| Clinker | | | | | | |
| 1 | 10 | 11 | 43 | 8 | 7 | 21 |
| 2 | 0 | 4 | 64 | 6 | 17 | 9 |
| 3 | 12 | 10 | 26 | 11 | 24 | 17 |
| A | 1 | 5 | 58 | 8 | 18 | 10 |
| B | 1 | 7 | 38 | 21 | 21 | 12 |

Les clinkers 1 à 3 sont des clinkers magnésiens poreux selon l'invention obtenus par frittage et les clinkers A et B sont des clinkers magnésiens denses obtenus par fusion donnés comme exemples comparatifs.
Les clinkers ont été fabriqués en préparant un cru par granulation des matières premières fines dans les proportions requises pour obtenir les compositions chimiques et minéralogiques voulues et en plaçant les crus dans des creusets en platine. Les creusets sont alors introduits dans un four de laboratoire et la température du four est élevée de 20°C/minute jusqu'à un palier de 900°C puis portés à la température d'élaboration telle que la totalité de la chaux soit combinée et les creusets sont maintenus à cette température pendant 1 heure. En fonction de la composition visée, on réglera la température d'élaboration dans une plage comprise entre 1250 et 1500°C afin d'ajuster la porosité dans la fourchette réquisé.

Les températures d'élaboration sont indiquées ci-dessous.

| Clinker n° | Température d'élaboration (°C) |
|---|---|
| 1 | 1330-1350 |
| 2 | 1350-1370 |
| 3 | 1280-1300 |
| A | 1500 |
| B | 1500 |

On a mesuré la porosité ouverte sous eau des différents clinkers selon le protocole d'essai décrit précédemment.

Les résultats sont donnés dans le tableau ci-dessous.

| Clinker n° | Porosité ouverte sous eau (%) |
|---|---|
| 1 | 34,7 |
| 2 | 5,2 |
| 3 | 4,5 |
| A | 0,8 |
| B | 0,6 |

On a soumis les clinkers n°1, 2 et 3 selon l'invention ainsi que les clinkers comparatifs A et B au test de stabilité à l'autoclave défini précédemment. On a constaté visuellement l'absence de présence de poudre sur les clinkers avant l'essai. Les résultats sont donnés dans le tableau ci-dessous.

Granulométrie (tamisage)

| Clinker | Passant à 500 $\mu$m (% en poids) | Passant à 1 mm (%) | Refus à 1 mm (%) |
|---|---|---|---|
| 1 | ND | 0,71 | 99,29 |
| 2 | 0,03 | 0,06 | 99,94 |
| 3 | 0,17 | 0,25 | 99,75 |
| A | 2,24 | 3,55 | 96,45 |
| B | 2,73 | 4,37 | 95,63 |
| ND : non déterminée | | | |

Ces essais montrent que les clinkers poreux selon l'invention ont une tendance nettement moindre à former des poussières fines qu'un même clinker dense.

Les analyses minéralogiques des produits de granulométrie inférieure et/ou supérieure à 1 mm après test autoclave sont données dans le tableau suivant

Composition minéralogique après test autoclave (% en poids)

| Clinker | $Mg(OH)_2$ | $C_3AH_6$ | Autres |
|---------|------------|-----------|--------|
| 1>1mm | 4 | 10 | Complément à 100 |
| 2>1mm | 4 | 0 | Complément à 100 |
| 3>1mm | 1 | 7 | Complément à 100 |
| A>1mm | 0 | 0 | Complément à 100 |
| B>1mm | 1 | 0 | Complément à 100 |
| B<1mm | 3 | 5 | Complément à 100 |

Malgré une présence forte d'hydrates (en particulier de brucite qui a une tendance à l'expansion importante) dans les produits à forte porosité ouverte, il n'y a pas eu de formation de poussière. Dans le même temps, les produits à faible porosité ouverte ont généré beaucoup de poussière et peu d'hydrates (surtout créés dans les fines <1mm). Dans le cas des clinkers poreux, la présence des pores accommode la formation de la brucite sans qu'il y ait éclatement du clinker, ce qui limite grandement le risque de production de poussière.

**Revendications**

1. Clinker comprenant, par rapport au poids total de clinker :

   dans sa composition chimique

   - 30 à 85 % $Al_2O_3$ ;
   - 3 à 45 % CaO ;
   - 9% à 45 % MgO dans sa composition minéralogique
   - 15 à 65% de phase Q, $Ca_{20}Al_{32}-_{2x}Mg_xSi_xO_{68}$ avec $2,5 \leq x \leq 3,5$
   - 5 à 40% de phase $MgAl_2O_4$ et ayant une porosité ouverte, telle que mesurée par l'essai de mesure sous eau de la porosité ouverte selon la norme NF B40-312 modifiée de 4 % à 60 %.

2. Clinker selon la revendication 1, **caractérisé en ce que** la porosité ouverte est de 4 à 45%.

3. Clinker selon l'une quelconque des revendications 1 à 2, **caractérisé en ce que** sa composition chimique comprend au moins 15% et mieux au moins 20% ou plus, en poids, de MgO.

4. Clinker selon l'une quelconque des revendications précédentes, **caractérisé en ce qu'**il comprend 35 à 65 %, de préférence 35 à 55 % en poids de $Al_2O_3$.

5. Clinker selon l'une quelconque des revendications 1 à 4, **caractérisé en ce que** sa composition minéralogique comprend 20 à 65% en poids de phase Q et 5 à 30% en poids de phase $MgAl_2O_4$.

6. Clinker selon l'une quelconque des revendications 1 à 5, **caractérisé en ce que** sa composition minéralogique comprend 2 à 15% en poids, de préférence 4 à 12%, de phase $C_{12}A_7$.

7. Procédé de fabrication d'un clinker selon l'une quelconque des revendications 1 à 6, **caractérisé en ce qu'**il comprend :

   - le mélange de $Al_2O_3$, CaO et MgO ou de précurseurs de ces composés dans les quantités nécessaires à l'obtention des quantités voulues en $Al_2O_3$, CaO et MgO ; et
   - le frittage du mélange.

8. Procédé selon la revendication 7, **caractérisé en ce que** le frittage s'effectue à une température de 1200°C à 1500°C.

9. Produit issu de concassage/criblage d'un clinker suivant l'une quelconque des revendications 1 à 7.

10. Utilisation d'un produit issu d'un clinker selon la revendication 9 comme flux pour la formation des laitiers de métallurgie secondaire utilisés pour la purification de l'acier, en particulier la désulfuration.

11. Utilisation d'un produit issu d'un clinker selon la revendication 9 pour la réalisation d'une couverture pour un répartiteur de coulée continue de l'acier.

12. Utilisation d'un clinker selon la revendication 9 pour la réduction de poussière de taille inférieure à 1 mm dans des environnements industriels.

13. Utilisation selon la revendication 12, dans laquelle le clinker comprend chimiquement de 20 à 45% de MgO par rapport au poids total du clinker.

**Patentansprüche**

1. Klinker, der bezüglich des Gesamtgewichts des Klinkers in seiner chemischen Zusammensetzung

   - 30 bis 85 % $Al_2O_3$,
   - 3 bis 45 % CaO,
   - 9 % bis 45 % MgO
   und in seiner mineralogischen Zusammensetzung
   - 15 bis 65 % Phase Q, $Ca_{20}Al_{32-2x}Mg_xSi_xO_{68}$ mit $2,5 \leq x \leq 3,5$,
   - 5 bis 40 % Phase $MgAl_2O_4$
   aufweist und
   eine offene Porosität, wie sie mittels eines Meßversuchs unter Wasser der offenen Porosität nach der geänderten Norm NF B40-312 gemessen wird, von 4 % bis 60 % aufweist.

2. Klinker gemäß Anspruch 1, **dadurch gekennzeichnet, daß** die offene Porosität 4 bis 45 % beträgt.

3. Klinker gemäß einem der Ansprüche 1 bis 2, **dadurch gekennzeichnet, daß** die chemische Zusammensetzung wenigstens 15 Gew.-% und besser wenigstens 20 Gew.-% oder mehr an MgO aufweist.

4. Klinker gemäß einem der vorangehenden Ansprüche, **dadurch gekennzeichnet, daß** er 35 bis 65 Gew.-%, vorzugsweise 35 bis 55 Gew.-% an $Al_2O_3$ aufweist.

5. Klinker gemäß einem der Ansprüche 1 bis 4, **dadurch gekennzeichnet, daß** seine mineralogische Zusammensetzung 20 bis 65 Gew.-% der Phase Q und 5 bis 30 Gew.-% der Phase $MgAl_2O_4$ aufweist.

6. Klinker gemäß einem der Ansprüche 1 bis 5, **dadurch gekennzeichnet, daß** seine mineralogische Zusammensetzung 2 bis 15 Gew.-%, vorzugsweise 4 bis 12 Gew.-% der Phase $C_{12}A_7$ aufweist.

7. Verfahren zum Herstellen eines Klinkers gemäß einem der Ansprüche 1 bis 6, **dadurch gekennzeichnet, daß** es

   - das Vermischen von $Al_2O_3$, CaO und MgO oder von Vorläufern dieser Komponenten in den zum Erhalten der gewünschten Mengen an $Al_2O_3$, CaO und MgO erforderlichen Mengen und
   - ein Sintern der Mischung
   aufweist.

8. Verfahren gemäß Anspruch 7, **dadurch gekennzeichnet, daß** das Sintern bei einer Temperatur von 1200 °C bis 1500 °C erfolgt.

9. Produkt, das aus einem Zermahlen/Sieben eines Klinkers gemäß einem der Ansprüche 1 bis 7 hervorgeht.

10. Verwendung eines Produkts aus einem Klinker gemäß Anspruch 9 als Strom für die Bildung der für die Reinigung von Stahl, insbesondere für dessen Entschwefelung, verwendeten Schlacken der Sekundärmetallurgie.

11. Verwendung eines Produkts aus einem Klinker gemäß Anspruch 9 für die Schaffung einer Abdeckung für einen Verteiler zum Stranggießen von Stahl.

**12.** Verwendung eines Klinkers gemäß Anspruch 9 zum Reduzieren von Staub einer Größe von kleiner als 1 mm in industrieller Umgebung.

**13.** Verwendung gemäß Anspruch 12, bei der der Klinker chemisch zwischen 20 und 45 % an MgO, bezogen auf das Gesamtgewicht des Klinkers, aufweist.

**Claims**

**1.** Clinker comprising, relative to the total clinker weight:

in the chemical composition thereof

- 30 to 85% $Al_2O_3$;
- 3 to 45% CaO;
- 9% to 45% MgO

in the mineralogical composition thereof

- 15 to 65% of phase Q, $Ca_{20}Al_{32-2x}Mg_xSi_xO_{68}$ where $2.5 \leq x \leq 3.5$
- 5 to 40% of phase $MgAl_2O_4$

and having an open porosity, as measured by the test for measuring open porosity under water as per the amended standard NF B40-312 from 4% to 60%.

**2.** Clinker according to claim 1, **characterised in that** the open porosity is from 4 to 45%.

**3.** Clinker according to any one of claims 1 to 2, **characterised in that** the chemical composition thereof comprises at least 15% and preferably at least 20% or more, by weight, of MgO.

**4.** Clinker according to any one of the preceding claims, **characterised in that** it comprises 35 to 65%, preferably 35 to 55% by weight of $Al_2O_3$.

**5.** Clinker according to any one of claims 1 to 4, **characterised in that** the mineralogical composition thereof comprises 20 to 65% by weight of phase Q and 5 to 30% by weight of phase $MgAl_2O_4$,

**6.** Clinker according to any one of claims 1 to 5, **characterised in that** the mineralogical composition thereof comprises 2 to 15% by weight, preferably 4 to 12%, of phase $C_{12}A_7$.

**7.** Method for manufacturing a clinker according to any one of claims 1 to 6, **characterised in that** it comprises:

- the mixture of $Al_2O_3$, CaO and MgO or of precursors of these compounds in the quantities required to obtain the sought quantities of $Al_2O_3$, CaO and MgO; and
- sintering of the mixture.

**8.** Method according to claim 7, **characterised in that** the sintering is performed at a temperature from 1200°C to 1500°C.

**9.** Product derived from crushing/screening of a clinker according to any one of claims 1 to 7.

**10.** Use of a product derived from a clinker according to claim 9 as a flux for the formation of secondary metallurgical slag used for the purification of steel, particularly for desulphurisation.

**11.** Use of a product derived from a clinked according to claim 9 for producing a cover for a continuous steel casting distributor.

**12.** Use of a clinker according to claim 9 for the reduction of dust less than 1 mm in size in industrial environments.

13. Use according to claim 12, wherein the clinker comprises chemically from 20 to 45% of MgO relative to the total weight of the clinker.

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- US 4795491 A
- US 20070000350 A
- US 4853034 A
- US 20050049138 A